# EUROPEAN PATENT APPLICATION

(11) **EP 4 738 315 A1**
(43) Date of publication of application: **06.05.2026**
(21) Application number: 25212593.5
(22) Date of filing: 31.10.2025
(51) Int. Cl.: G09B 5/02, B23K 9/095, G09B 19/24

(54) **WELD TRAINING SIMULATION SYSTEMS WITH ELECTROMAGNETIC HAPTIC FEEDBACK**

(30) Priority: 05.11.2024 US 202463716345 P; 03.10.2025 US 202519349316
(71) Applicant: Illinois Tool Works Inc., Glenview IL 60025 (US)
(72) Inventor: BRUESEWITZ, Jeremy, Glenview, 60025 (US); KOPAC III, Jordan J., Glenview, 60025 (US); SCHNEIDER, Joseph C., Glenview, 60025 (US); GUSE, Matthew, Glenview, 60025 (US)
(74) Representative: HGF

(57) **Abstract**

In some examples, weld training simulation systems provide haptic feedback through the use of a magnetic field generated by one or more electromagnets positioned in or on a welding workpiece and/or a welding-type tool (or a stick electrode held by the welding-type tool). In some examples, an operator holding the welding-type tool will experience haptic feedback due to an attractive or repulsive magnetic field force that impacts the electromagnet(s) and/or magnetic material in the welding-type tool (or the stick electrode held by the welding-type tool 300). In some examples, the haptic feedback may be helpful in simulating different events and/or situations, such as, for example, an electrode sticking event, an excessive impedance event, a burning flame event, and/or an electric arc event.

## Description

### CROSS REFERENCE TO RELATED PATENT APPLICATIONS

This application claims priority to, and the benefit of, U.S. Provisional Patent Application No. 63/716,345 filed November 5, 2024, entitled "WELD TRAINING SIMULATION SYSTEMS WITH ELECTROMAGNETIC HAPTIC FEEDBACK," the entire contents of which being hereby incorporated by reference.

### TECHNICAL FIELD

The present disclosure generally relates to weld training systems, and, more particularly, to weld training simulation systems with electromagnetic haptic feedback.

### BACKGROUND

New welding operators sometimes go through weld training prior to being entrusted to perform actual live manual welding operations for a real job and/or on a real job site. Experienced welding operators can also go through training to try out different tools, reacquaint themselves with rarely used tools, practice selected welding techniques, etc.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to weld training simulation systems with electromagnetic haptic feedback, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIGS. 1a-1b show examples of a weld training simulation system, in accordance with aspects of this disclosure.
FIG. 2 is a flow diagrams illustrating an example weld training simulation process of the weld training simulation system of FIG. 1b, in accordance with aspects of this disclosure.
FIG. 3 shows an enlarged example of a welding-type tool that might be used in the weld training simulation system of FIGS. 1a-1b, in accordance with aspects of this disclosure.
FIG. 4 shows an enlarged example of a stick electrode held by a welding-type tool that might be used in the weld training simulation system of FIGS. 1a-1b, in accordance with aspects of this disclosure.
FIGS. 5a-5b show enlarged examples of workpieces that might be used in the weld training simulation system of FIGS. 1a-1b, in accordance with aspects of this disclosure.
FIG. 6 shows an example of a magnetic field that might be generated by an electromagnet of the example welding-type tool of FIG. 4, in accordance with aspects of this disclosure.

The figures are not necessarily to scale. Where appropriate, the same or similar reference numerals are used in the figures to refer to similar or identical elements.

### DETAILED DESCRIPTION

Weld training systems can be helpful in training new and/or experienced welding operators to perform (e.g., manual) welding-type operations. However, live weld training systems that use live welding-type operations to train operators waste a significant amount of workpiece material and/or consumables in the course of the training, while also risking damage to expensive welding-type equipment.

In contrast, simulated weld training systems that train operators using simulated welding-type operations can reuse workpiece material, do not "consume" consumables, and are unlikely to result in damage to welding-type equipment. That said, simulated weld training systems sometimes find it difficult to effectively simulate real world situations and/or events that may occur during real world live welding-type operations.

Some examples of the present disclosure relate to weld training simulation systems that simulate certain real world situations and/or events using haptic feedback provided through the use of electromagnets. In some examples, an electromagnet is positioned in or on a first welding device (e.g., a welding-type tool or a stick electrode held by the welding-type tool) while magnetic material or another electromagnet is positioned in or on a second welding device (e.g., a workpiece). When electric current is used to energize and/or activate the electromagnet of the first welding device, the electromagnet generates a magnetic field with an attractive or repelling magnetic force that may attract and/or repel the magnetic material (and/or electromagnet) in the second welding device. An operator holding the welding-type tool may experience the attractive and/or repelling magnetic force as haptic feedback that can be useful when simulating different real world situations and/or events (e.g., an electrode sticking event, an excessive impedance event, an arc/flame event, etc.).

Some examples of the present disclosure relate to a non-transitory computer readable medium comprising machine readable instructions which, when executed by processing circuitry, causes the processing circuitry to: control an electromagnet in or on a first welding-type device to generate a magnetic field that induces the first welding-type device and a second welding-type device to be mutually attracted to one another via a magnetic attraction, or control the electromagnet to generate a reverse magnetic field that induces the first welding-type device and the second welding-type device to be mutually repelled from one another via a magnetic repulsion.

In some examples, the first welding-type device or the second welding-type device comprises a workpiece, a welding-type tool, or a welding electrode. In some examples, controlling the electromagnet comprises controlling a power source, or a controllable circuit element, in electrical communication with the electromagnet. In some examples, the machine readable instructions, when executed by the processing circuitry, cause the processing circuitry to control the electromagnet to generate the magnetic field in response to: a voltage setting being below a voltage threshold, a current setting being below a current threshold, a simulated power being below a power threshold, a travel speed of a welding-type tool being below a speed threshold, a contact tip to work distance being below a distance threshold, or a selected training exercise involving simulation of an electrode sticking event.

In some examples, the machine readable instructions, when executed by the processing circuitry, cause the processing circuitry to control a motor or movement mechanism of the welding-type tool to halt movement of a welding electrode held by the welding-type tool in response to: the voltage setting being below the voltage threshold, the current setting being below the current threshold, the simulated power being below the power threshold, the travel speed of the welding-type tool being below the speed threshold, the contact tip to work distance being below the distance threshold, or the selected training exercise involving simulation of the electrode sticking event. In some examples, the machine readable instructions, when executed by the processing circuitry, cause the processing circuitry to control the electromagnet to generate the reverse magnetic field in response to: sensor data indicating that a clamp is not securely connected to a workpiece, the sensor data indicating that a cable is not securely connected to mock welding-type equipment, or a selected training exercise involving simulation of an excessive impedance event. In some examples, the machine readable instructions, when executed by the processing circuitry, cause the processing circuitry to control the electromagnet to generate the reverse magnetic field in response to simulation of a flame or an electrical arc.

Some examples of the present disclosure relate to a welding system, comprising: a first welding-type device; an electromagnet in or on the first welding-type device; and processing circuitry configured to: control the electromagnet to generate a magnetic field that induces the first welding-type device and a second welding-type device to be mutually attracted to one another via a magnetic attraction, or control the electromagnet to generate a reverse magnetic field that induces the first welding-type device and the second-type welding device to be mutually repelled from one another via a magnetic repulsion.

In some examples, the first welding-type device or the second welding-type device comprises a workpiece, a welding-type tool, or a welding electrode. In some examples, the first welding-type device comprises the welding-type tool, the welding-type tool being connected to mock welding-type equipment via a tool cable, the electromagnet being configured to receive an electrical current via the tool cable when the electromagnet is controlled to generate the magnetic field or the reverse magnetic field, and the welding-type tool being configured to send a trigger signal to the mock welding-type equipment via the tool cable. In some examples, controlling the electromagnet comprises controlling a power source, or a controllable circuit element, in electrical communication with the electromagnet.

In some examples, the processing circuitry is configured to control the electromagnet to generate the magnetic field in response to: a voltage setting being below a voltage threshold, a current setting being below a current threshold, a simulated power being below a power threshold, a travel speed of a welding-type tool being below a speed threshold, a contact tip to work distance being below a distance threshold, or a selected training exercise involving simulation of an electrode sticking event. In some examples, the welding system further comprises: a motor; and a movement mechanism connected to the motor, the movement mechanism configured to use a motor output of the motor to move a welding electrode, wherein the processing circuitry is further configured to halt the motor, such that there is no motor output that the movement mechanism can use to move the welding electrode, in response to the voltage setting being below the voltage threshold, the current setting being below the current threshold, the simulated power being below the power threshold, the travel speed of the welding-type tool being below the speed threshold, the contact tip to work distance being below the distance threshold, or the selected training exercise involving simulation of the electrode sticking event. In some examples, the processing circuitry is configured to control the electromagnet to generate the reverse magnetic field in response to: simulation of a flame or an electrical arc, sensor data indicating that a clamp is not securely connected to a workpiece, the sensor data indicating that a cable is not securely connected to mock welding-type equipment, or a selected training exercise involving simulation of an excessive impedance event.

Some examples of the present disclosure relate to a method, comprising: controlling, via processing circuitry, an electromagnet in or on a first welding-type device to generate a magnetic field that induces the first welding-type device and a second welding-type device to be mutually attracted to one another via a magnetic attraction, or controlling, via the processing circuitry, the electromagnet to generate a reverse magnetic field that induces the first welding-type device and the second welding-type device to be mutually repelled from one another via a magnetic repulsion.

In some examples, the first welding-type device or the second welding-type device comprises a workpiece, a welding-type tool, or a welding electrode. In some examples, controlling the electromagnet comprises controlling a power source, or a controllable circuit element, in electrical communication with the electromagnet. In some examples, the first welding-type device comprises the welding-type tool, the welding-type tool being connected to mock welding-type equipment via a tool cable, the electromagnet being configured to receive an electrical current via the tool cable when the electromagnet is controlled to generate the magnetic field or the reverse magnetic field, and the welding-type tool being configured to send a trigger signal to the mock welding-type equipment via the tool cable.

In some examples, the processing circuitry controls the electromagnet to generate the magnetic field in response to: a voltage setting being below a voltage threshold, a current setting being below a current threshold, a simulated power being below a power threshold, a travel speed of a welding-type tool being below a speed threshold, a contact tip to work distance being below a distance threshold, or a selected training exercise involving simulation of an electrode sticking event. In some examples, the processing circuitry controls the electromagnet to generate the reverse magnetic field in response to: simulation of a flame or an electrical arc, sensor data indicating that a clamp is not securely connected to a workpiece, the sensor data indicating that a cable is not securely connected to mock welding-type equipment, or a selected training exercise involving simulation of an excessive impedance event.

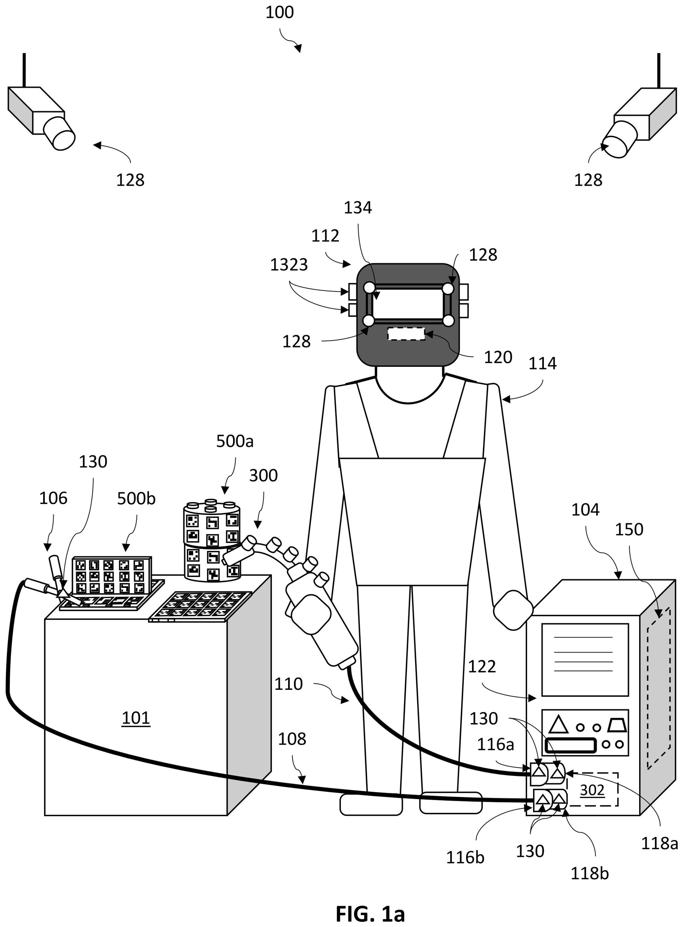

FIGS. 1a-1b show examples of a weld training simulation system 100. As shown, the weld training simulation system 100 includes several workpieces 500, a piece of mock welding-type equipment 104, a clamp 106 connected to the mock welding-type equipment 104 via a clamp cable 108, a welding-type tool 300 attached to the mock welding-type equipment 104 via a tool cable 110, and a welding helmet 112 worn by an operator 114 handling the welding-type tool 300.

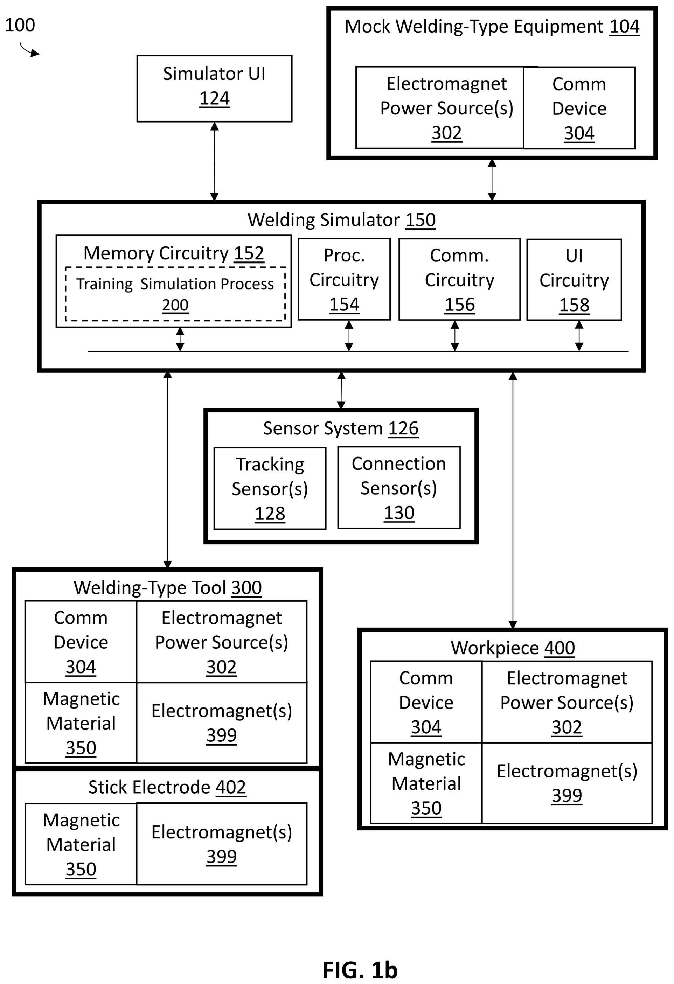

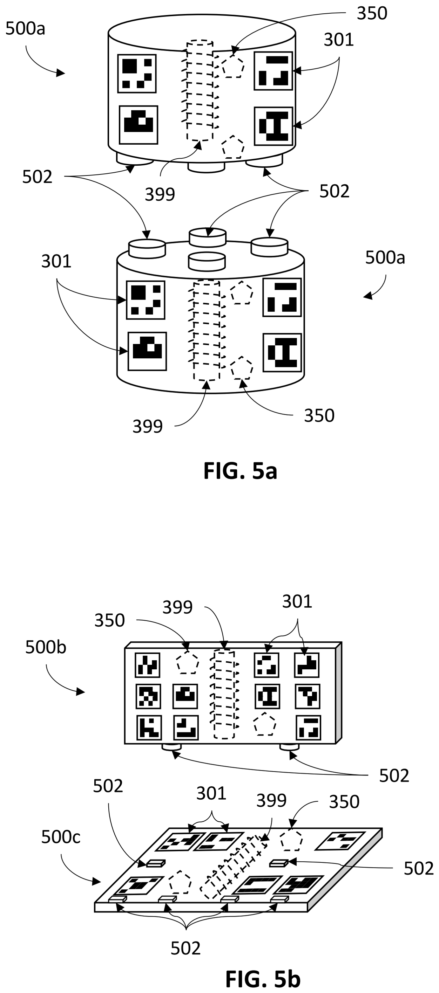

While depicted in FIG. 1 as a welding torch or gun configured for gas metal arc welding (GMAW), in some examples, the welding-type tool 300 may instead be a different welding-type tool 300. For example, the welding-type tool 300 may be an electrode holder 400 (i.e., stinger) that holds a stick electrode 402 configured for shielded metal arc welding (SMAW) (see, e.g., FIG. 5). As another example, the welding-type tool 300 may be a torch and/or filler rod configured for gas tungsten arc welding (GTAW), a welding gun configured for flux-cored arc welding (FCAW), and/or a plasma cutter. In some examples, the welding-type tool 300 may be a mock welding-type tool, and/or be configured for mock (as opposed to live) welding-type operations, such as for (e.g., simulated and/or virtual/augmented reality) weld training.

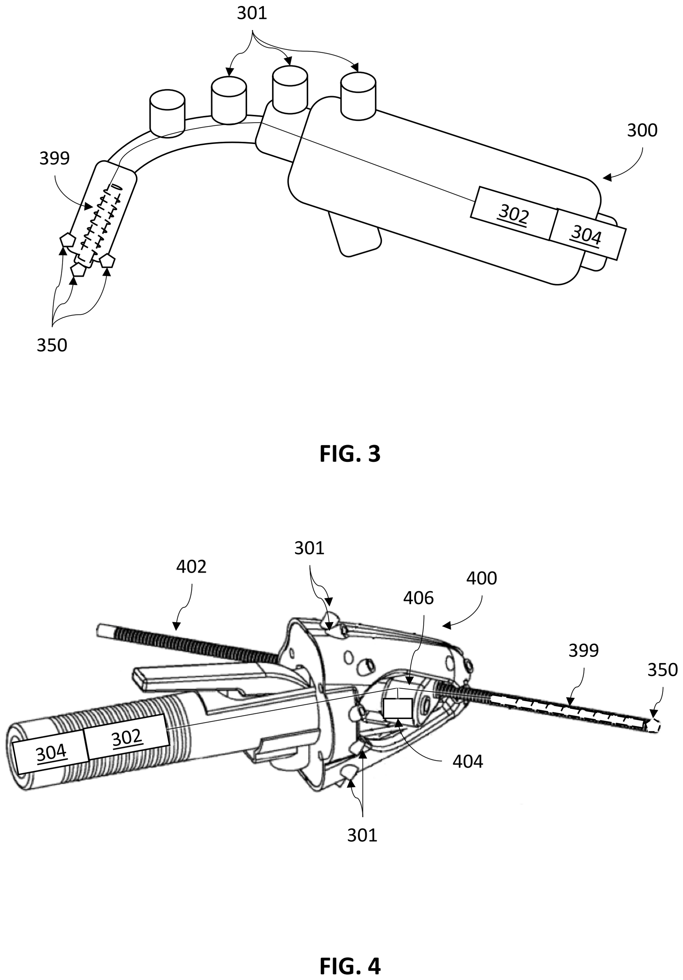

FIG. 3 shows an enlarged depiction of an example welding-type tool 300. As shown, the welding-type tool 300 is a metal inert gas (MIG) gun with magnetic material 350 and an electromagnet 399 positioned in or on a nozzle and/or contact tip of the MIG gun. In examples where the welding-type tool 300 is a tungsten inert gas (TIG) torch configured for gas tungsten arc welding (GTAW), the magnetic material 350 and/or electromagnet 399 may be positioned in or on the nozzle and/or tungsten electrode of the TIG torch.

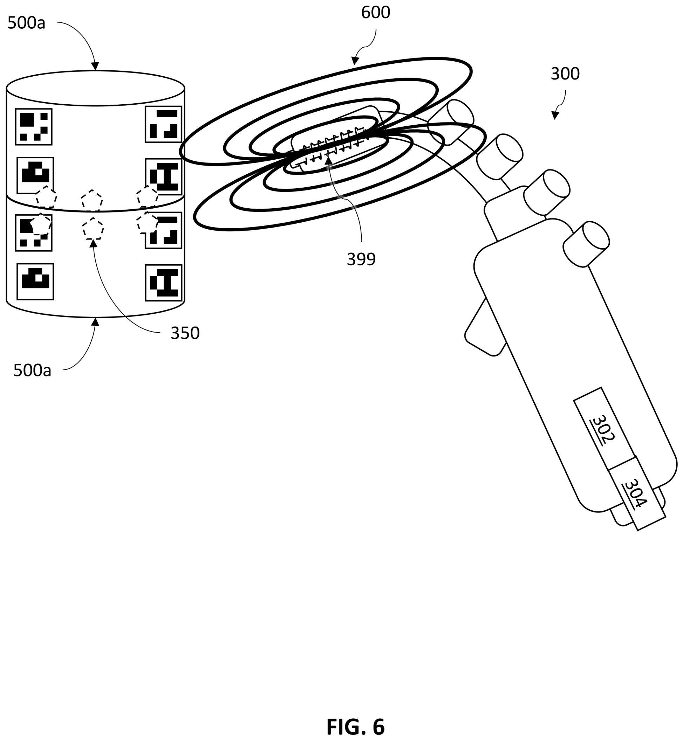

In the examples of FIG. 3, the electromagnet 399 is shown as being comprised of conductive wire coiled around a magnetic, ferromagnetic, or ferrimagnetic core. In some examples, the electromagnet 399 may be differently constructed. In some examples, the electromagnet 399 generates a magnetic field 600 when an electric current is conducted by (e.g., the wire coil of) the electromagnet 399, and does not generate the magnetic field 600 when no electric current is conducted by (e.g., the wire coil of) the electromagnet 399 (see, e.g., FIG. 6).

In some examples, the strength of the magnetic field 600 generated by the electromagnet 399 is directly proportional to the strength of the electric current being conducted by (e.g., the wire coil of) the electromagnet 399. In some examples, the polarity of the magnetic field 600 generated by the electromagnet 399 can be changed and/or reversed by reversing the direction and/or polarity of the electric current conducted by (e.g., the wire coil of) the electromagnet 399.

In some examples, the magnetic material 350 is comprised of one or more permanent magnets, or ferromagnetic material (e.g., integrated into the welding-type tool 300). While shown as having both the magnetic material 350 and electromagnet 399, in some examples, the welding-type tool 300 may only have one or the other.

In some examples, the magnetic field 600 generated by the electromagnet 399 has a magnetic force that can attract or repel the magnetic material 350. In some examples (e.g., where the magnetic material 350 is a permanent magnet), the magnetic material 350 has a particular polarization, and the magnetic force attracts the magnetic material 350 to a pole of the electromagnet 399 that is oppositely polarized, and/or repels the magnetic material 350 from a pole of the electromagnet that is similarly polarized. In some examples (e.g., where the magnetic material 350 is ferromagnetic material), the magnetic material 350 has no permanent polarization, and will dynamically polarize itself to be opposite that of the closest pole of the electromagnet 399, such that the magnetic force will always attract the magnetic material 350. In some examples, the magnetic field 600 can either attract or repel another electromagnet 399 that is also generating a magnetic field 600, depending on the relative polarities.

In the example of FIG. 3, the welding-type tool 300 is shown as including an electromagnet power source 302. Though termed as a power source, in some examples, the electromagnet power source 302 may include both a current/voltage source and a corresponding circuit comprising one or more controllable circuit elements (e.g., electrical switches, relays, transistors, etc.) As shown, the electromagnet power source 302 is in electrical communication with the electromagnet 399. In some examples, the electromagnet power source 302 is used to supply electrical current (and/or voltage, power, etc.) to the electromagnet 399, thereby energizing and/or activating the electromagnet 399. In some examples, control, activation, and/or energizing of the electromagnet 399 may be controlled via control of the (e.g., voltage/current source and/or controllable circuit element(s) of the) electromagnet power source 302.

In the example of FIG. 3, the welding-type tool 300 further includes a wireless communication device 304. In some examples, the wireless communication device 304 is configured to communicate via Bluetooth, NFC, RFID, Zigbee, Wifi, ultrasonic transmission, radio transmission, and/or other wireless communication means. In some examples, the wireless communication device 304 wirelessly communicates with a welding simulator 150 of the weld training simulation system 100, and relays one or more command signals from the welding simulator 150 to the electromagnetic power source 302. In some examples, the welding simulator 150 controls the electromagnet power source 302 and/or electromagnet 399 through the wireless communication device 304.

FIG. 4 shows a depiction of an electrode holder 400 (e.g., stinger) that may be used as the welding-type tool 300. In the example of FIG. 4, the electrode holder 400 also includes an electromagnet power source 302 and wireless communication device 304.

As shown, the electrode holder 400 also includes a motor 404 and a movement mechanism 406 configured to use a motor output of the motor 404 to move a stick electrode 402 held by the electrode holder 400 (e.g., relative to the electrode holder 400). In some examples, the movement mechanism 406 may comprise one or more power screws, lead screws, (e.g., rotary, slide, etc.) actuators, and/or other appropriate mechanisms. In some examples (e.g., where the stick electrode 402 is a mock stick electrode 402), movement of the stick electrode 402 via the movement mechanism 406 helps to simulate consumption of the stick electrode 402 during a simulated welding-type operation. In some examples, the welding simulator 150 controls the movement mechanism 406 and/or motor 404 through the wireless communication device 304 to start or stop movement of the stick electrode 402 (e.g., depending on whether the simulation calls for simulation consumption of the stick electrode 402).

In the example of FIG. 4, the electromagnet 399 and magnetic material 350 are positioned in or on an end of the stick electrode 402, rather than in or on the electrode holder 400. In some examples where the magnetic material 350 is a ferromagnetic material, the magnetic material 350 may be integrated into the stick electrode 402. Though shown as having both electromagnet 399 and magnetic material 350, in some examples, the stick electrode 402 may only have one or the other.

FIGS. 5a-5b show an enlarged example depictions of different workpieces 500 that also have magnetic material 350 and an electromagnet 399. While shown as having both the magnetic material 350 and electromagnet 399, in some examples, the workpiece(s) 500 may only have one or the other. In some examples where the magnetic material 350 is a ferromagnetic material, the magnetic material 350 may be integrated into the workpiece(s) 500.

In the examples of FIGS. 5a and 5b, the magnetic material 350 and the poles of the electromagnet 399 are positioned proximate an end of each workpiece 500, where the workpiece 500 might be joined to another workpiece 500 (e.g., at a joint). In some examples, the magnetic material 350 and/or electromagnet 399 may be positioned elsewhere in or on the workpiece 500.

In the examples of FIGS. 5a-5b, the workpieces 500 include mechanical connectors 502 (e.g., hook and loop fasteners, latches and/or catches, complementary clasps, complementary protrusions and cavities, twist locks, etc.). In some examples, multiple workpieces 500 may be joined together via the mechanical connectors 502 (e.g., so as to form a joint where a simulated welding-type operation may occur). In some examples, the mechanical connectors 502 may be used instead of magnetic connectors to join workpieces 500 so as to avoid the inclusion of oppositely polarized magnetic material 350 in different workpieces 500 (e.g., which might be oppositely impacted by a magnetic field 600 generated by an electromagnet 399).

In some examples, the magnetic field 600 generated by the electromagnet 399 of the welding-type tool 300 or workpiece 500 may have a magnetic field force that attracts and/or repels the magnetic material 350 and/or electromagnet 399 in the other of the welding-type tool 300 or workpiece 500 (depending on respective polarities). In some examples, the attractive and/or repelling magnetic field force may force the welding-type tool 300 and workpiece 500 to come together or be pushed apart (depending on polarity). An operator 114 holding, using, and/or manipulating the welding-type tool 300 may experience the attractive and/or repelling magnetic field force as haptic feedback that pulls or pushes the operator 114 and/or welding-type tool 300 towards or away from the workpiece(s) 500.

In some examples, the haptic feedback induced by the attractive and/or repelling magnetic field force may be used by the weld training simulation system 100 (and/or welding simulator 150) to help simulate different events and/or situations. For example, the weld training simulation system 100 may use the electromagnet(s) 399 to generate an attractive magnetic field force that provides haptic feedback simulating the feel of an electrode sticking event.

In some examples where the welding-type tool 300 is a stick electrode holder 400, the weld training simulation system 100 may additionally stop and/or disable the electrode holder motor 404 and/or movement mechanism 406 to further help simulate the feel of an electrode sticking event. In some examples, the resulting halting of motorized retraction of the stick electrode 402 held by the stick electrode holder 400 further helps simulate the electrode sticking event because the motorized retraction of the stick electrode 402 simulates consumption of the stick electrode 402, and the stick electrode 402 would not be consumed during an actual live electrode sticking event.

As used herein, an electrode sticking event refers to an event that sometimes occurs during actual live welding-type operations where the welding-type tool 300 (or an electrode of or held in the welding-type tool 300) "sticks" to a workpiece 500 (or adheres, clings, etc.). In some examples, such a sticking event may occur as a result of there being too little heat to melt and/or break off a stick electrode 402 and/or filler material. In some examples, the inadequate heat may be a result of too little voltage/current/power or too quick of a travel speed. Additionally, or alternatively, the sticking event may occur as a result of too little distance between the workpiece 500 and the welding-type tool 300 (or an electrode of or held by the welding-type tool 300).

As another example, the weld training simulation system 100 may use the electromagnet(s) 399 to generate a repulsive magnetic field force that provides haptic feedback simulating the feel of an excessive impedance event. As used herein, an excessive impedance event refers to an event that sometimes occurs during actual live welding-type operations where there is excessive impedance in the welding circuit. In some examples, excessive impedance in a welding circuit may result in an inability to generate an electrical (e.g., welding) arc when an electrical arc is desired.

In some examples (e.g. where the welding-type tool 300 is a MIG gun), a trigger of the welding-type tool 300 is depressed to signal to welding-type equipment that power should be provided to produce the electrical arc. In some examples, the same trigger depression also signals that a wire electrode should be fed to the welding-type tool 300 and out of a contact tip of the welding-type tool 300, towards the workpiece 500.

However, while the wire electrode may be consumed when there is an electrical arc, in the absence of an electrical arc (e.g., due to excessive impedance) the unconsumed wire electrode may continually feed from an end of the welding-type tool. Eventually the wire electrode will make contact with the workpiece 500 and push the welding-type tool 300 away from the workpiece 500. In some examples, a repulsive magnetic field force may simulate the field of the welding-type tool 300 being pushed away from the workpiece 500, such as might occur due to a continually feeding unconsumed wire electrode during an excessive impedance event.

As another example, the weld training simulation system 100 may use the electromagnet(s) 399 to generate a (e.g., weaker) repulsive magnetic field force that provides (e.g., weaker) haptic feedback simulating the feel of an arc or flame event. As used herein, an electrical arc event refers to an event that sometimes occurs during actual live welding-type operations when an electrical current travels (e.g., in an "arc") through the air/atmosphere between the workpiece 500 and the welding-type tool 300 (or an electrode of or held by the welding-type tool 300). As used herein, a burning flame event refers to an event that sometimes occurs during actual live welding-type operations when a flame is generated due to an output of the welding-type tool 300 (e.g., during oxy fuel cutting). In some examples, when a flame and/or an electrical arc is generated during actual live welding-type operations, an operator 114 holding the welding-type tool 300 (or stick electrode 402) may experience a slight vibration, hovering, and/or push back due to the arc.

In some examples, the weld training simulation system 100 identifies a power, magnitude, and/or intensity of a magnetic field 600 that will produce a haptic feedback appropriate for a particular simulation event. In some examples, the weld training simulation system 100 controls the amount of electrical current that is supplied to the electromagnet(s) 399 (e.g., via the electromagnet power source(s) 302) so that the magnetic field is generated with the appropriate power, magnitude, and/or intensity.

In some examples, the weld training simulation system 100 further identifies an appropriate polarity and/or orientation of the magnetic field 600 that will produce the desired (e.g., attractive or repulsive) haptic feedback. In some examples, the weld training simulation system 100 controls the polarity and/or direction of the electric current that is supplied to the electromagnet(s) 399 so that the magnetic field is generated with the appropriate polarity and/or orientation.

While the welding-type tool 300 and electrode holder 400 are shown as having their own electromagnet power source 302 in the examples of FIGS. 3 and 4, in some examples, it may be more convenient for the electromagnet power source 302 to be positioned elsewhere. Thus, in the example of FIGS. 1a-1b, the mock welding-type equipment 104 is also shown as having an electromagnet power source 302.

In some examples, the mock welding-type equipment 104 serves as a stand in for a welding-type power supply, wire feeder, gas supply, and/or other equipment that might be used in a real life welding environment. In some examples, electrical current may be generated by the electromagnet power source 302 of the mock welding-type equipment 104, and thereafter be supplied to the electromagnet(s) 399 in the welding-type tool 300 through a connection with the mock welding-type equipment 104. In some examples, electrical current may generated by the electromagnet power source 302 of the mock welding-type equipment 104, and thereafter supplied to the electromagnet(s) 399 in a workpiece 500 through the clamp 106 clamped to the workpiece 500, and a connection between the clamp 106 and the mock welding-type equipment 104.

In the example of FIG. 1a, the welding-type tool 300 and clamp 106 are shown connected to mock welding-type equipment 104 via the tool cable 110 and clamp cable 108. The clamp 106 is further shown clamped to a workpiece 500 (though, in some examples, the clamp 106 may instead be clamped to the welding bench 101). In some examples, the workpiece(s) 500 may be separately connected to the mock welding-type equipment 104.

In the example of FIG. 1a, the welding-type tool 300 is shown connected to the mock welding-type equipment 104 via a tool cable 110 that terminates at a tool cable plug 116a. The clamp 106 is shown connected to the mock welding-type equipment 104 via a clamp cable 108 that terminates at a clamp cable plug 116b. As shown, the tool cable plug 116a is connected to a tool cable socket 118a of the mock welding-type equipment 104, and the clamp cable plug 116b is connected to a clamp cable socket 118b of the mock welding-type equipment 104, thereby connecting the welding-type tool 300 and clamp 106 to the mock welding-type equipment 104.

In the example of FIG. 1b, the mock welding-type equipment 104 (and the weld training simulation system 100) further includes a welding simulator 150. While the welding simulator 150 is shown as being part of and/or implemented by the mock welding-type equipment 104, in some examples, the welding simulator 150 may instead, or additionally, be part of and/or implemented by the welding helmet 112 (e.g., via helmet circuitry 120). In some examples where the welding simulator 150 is not part of and/or implemented by the mock welding-type equipment 104, the mock welding-type equipment 104 may include a wireless communication device 304 configured to communicate with the welding simulator 150.

In some examples where the welding simulator 150 is part of and/or implemented by the mock welding-type equipment 104, the connection of the welding-type tool 300 to the mock welding-type equipment 104 serves as a connection of the welding-type tool 300 to the welding simulator 150. In some examples, the welding-type tool 300 transmits one or more tool signals to the welding simulator 150, such as, for example, via the tool cable 110. For example, where the welding-type tool 300 is a MIG welding gun, the welding-type tool 300 may send one or more tool (and/or trigger) signals to the welding simulator 150 when a trigger of the MIG welding gun is pulled/depressed and/or released.

In some examples, the welding simulator 150 controls the electromagnet(s) 399 in the welding-type tool 300, stick electrode 402, and/or workpiece(s) 500 to provide haptic feedback (e.g., simulating certain welding events). In some examples, the welding simulator 150 uses one or more control signals to control the electromagnet(s) 399 (and/or electromagnet power source(s) 302).

In some examples, the welding simulator 150 determines whether to provide haptic feedback and/or simulate a particular welding event based on one or more parameters, received signals, sensor data, and/or other information. For example, the welding simulator 150 may use the tool signal(s) to determine whether to simulate a welding arc during a welding simulation (e.g., by simulating an arc when the trigger is pulled/depressed). In some examples, the tool signal(s) may be considered a tool parameter. In some examples where the welding simulator 150 is not part of and/or implemented by the mock welding-type equipment 104, the mock welding-type equipment 104 may forward the tool signal(s) (and/or other representative signals) to the welding simulator 150 (e.g., via the wireless communication device 304).

In the example of FIG. 1a, the mock welding-type equipment 104 includes an equipment interface 122. As shown, the equipment interface 122 includes a (e.g., touch) display screen and a control panel. In some examples, the equipment display screen includes an audio output (e.g., speaker(s)). In some examples, the equipment control panel includes one or more knobs, buttons, keys, levers, switches, microphones, dials, and/or other devices that can provide input to the mock welding-type equipment and/or welding simulator 150. In some examples, the equipment interface 122 is used as some or all of a weld simulator user interface (UI) 124 of the welding simulator 150 (see, e.g., FIG. 1b).

In some examples, an operator 114 may input simulation and/or equipment parameters via the weld simulator UI 124. In some examples, equipment parameters include target voltage, target current, target wire feed speed, wire/filler type, wire/filler diameter, gas type, target gas flow rate, welding-type process, and/or other information that might be input into and/or used by real life welding-type equipment. In some examples, simulation parameters include simulated material type of the workpiece(s) 500, simulated filler material type, type of welding-type tool 300, position of welding-type operation, difficulty level, realism level, goal(s), task(s), training exercise/lesson/scenario, and/or other information that may be used by the welding simulator 150 to conduct a weld training simulation.

In some examples, the operator 114 may use the equipment interface 122 to view, hear, and/or otherwise perceive outputs of the welding simulator 150. In some examples, the welding simulator 150 may provide outputs to help the operator 114 understand the current simulation and/or equipment parameters, and/or provide feedback from the weld training simulation (e.g., grade(s), score(s), goals met/unmet, technique feedback, recommendations, guidance, explanation of haptic feedback, etc.).

In some examples, the weld simulator 150 uses (e.g., simulation and/or equipment) parameters input via the weld simulator UI 124 to conduct a weld training simulation. In some examples, one or more simulation parameters may be automatically determined and/or detected by the welding simulator 150 instead of, or in addition to, being input.

In some examples, the welding simulator 150 determines how and/or in what way to conduct the weld training simulation based on received, input and/or determined (e.g., simulation, tool, and/or equipment) parameters. In some examples, the welding simulator 150 determines if/when/how to provide haptic feedback (e.g., to simulate a particular event) based on the input and/or determined (e.g., simulation, tool, and/or equipment) parameters. In some examples, the weld training simulation may change if different parameters are received, input, and/or detected/determined.

In the examples of FIG. 1b, the weld training simulation system 100 is further shown as including a sensor system 126. As shown, the sensor system 126 includes both tracking sensors 128 and connection sensors 130. In the example of FIG. 1a, the connection sensors 130 are shown as being in and/or on the clamp 106, equipment sockets 118 of the mock welding-type equipment 104, and/or plugs 116 of the clamp cable 108 and/or tool cable 110. lin some examples, the workpiece(s) 500 and/or welding bench 101 may also include one or more connection sensors 130.

In some examples, one or more of the connection sensors 130 comprise one or more pressure sensors, optical sensors/emitters, audio sensors/emitters, ultrasonic sensors/emitters, Bluetooth sensors, near field communication (NFC) sensors, radio frequency identification (RFID) sensors, proximity sensors, and/or other appropriate sensors. In some examples, the connection sensors 130 sense, detect, and/or measure how securely the plugs 116 are connected to sockets 118 of the mock welding-type equipment 104, and/or how securely the clamp 106 is connected to a welding bench 101 and/or workpiece 500.

In some examples, the security of the connection(s), as measured by the connection sensor(s) 130, may be used to determine whether to simulate an excessive impedance event. In some real life situations, excessive impedance may result from poorly secured connections between the clamp cable 108 and/or tool cable 110 and welding-type equipment, and/or between the clamp 106 and the welding bench 101 and/or workpiece(s) 500. Thus, in some examples, the weld training simulation system 100 may simulate an excessive impedance event in response to sensor data from one or more of the connection sensor(s) 130 indicating a poor connection between the clamp cable 108 and/or tool cable 110 and the mock welding-type equipment 104, and/or between the clamp 106 and the welding bench 101 and/or workpiece(s) 500.

For example, where pressure sensors are used, the connection sensor(s) may measure a pressure of a connection between the plug(s) 116 and socket(s) 118, and the welding simulator 150 may conclude the connection is secure if the pressure is above a (e.g., input and/or stored) pressure threshold. As another example, where RFID, NFC, and/or Bluetooth sensors are used, the welding simulator 150 may conclude the connection is secured if the connection sensors 130 in the plug(s) 116 and socket(s) 118 can successfully communicate with each other and/or complete a communication exchange (e.g., a handshake operation). As another example, where optical, audio, and/or ultrasonic sensors are used, the welding simulator 150 may conclude the connection is secure if the connection sensors 130 in the plugs 116 can detect corresponding optical, audio, and/or ultrasonic emissions from complementary (e.g., emitting) connection sensors 130 in the sockets 118 (and/or vice versa).

In the example of FIG. 1a, the tracking sensors 128 of the weld training simulation system 100 are shown both as part of the welding helmet 112 and fixed in the surrounding welding environment (and/or weld cell). In some examples, the weld tracking sensors 128 may comprise camera sensors, optical sensors, infra-red (IR) sensors, thermal sensors, acoustic sensors, ultrasonic sensors, electromagnetic sensors, and/or other appropriate types of sensors. In some examples, the weld tracking sensors 128 may include processing circuitry configured to process data captured by the weld tracking sensors 128, and/or communication circuitry configured to transmit the captured data to other components of the weld training simulation system 100.

In some examples, sensor data captured by the weld tracking sensors 128 is used by the welding simulator 150 to track positions and/or orientations of components of the weld training simulation system 100 (e.g., the workpiece(s) 500, the welding-type tool 300, the welding helmet 112, etc.). In some examples, the position and/or orientation information is used by the welding simulator 150 to determine if/when to provide haptic feedback and/or simulate an event (e.g., an arc/flame event or stuck electrode event).

In the example of FIG. 1a, the environment fixed weld tracking sensors 128 are shown as being stationary and/or mounted to fixtures (e.g., wall(s), pillar(s), ceiling, etc.). While two environment fixed weld tracking sensors 128 are shown in the example of FIG. 1, in some examples, more or fewer environment fixed weld tracking sensors 128 may be used. In some examples, the environment fixed weld tracking sensors 128 may be used to supplement and/or replace helmet based weld tracking sensors 128 of the welding helmet 112.

In the example of FIG. 1a, helmet tracking sensors 128 are shown attached to a helmet shell of the welding helmet 112. In some examples, the weld tracking sensors 128 of the welding helmet 112 are fixed relative to each other and/or the helmet shell. In some examples, the relative positions of the helmet weld tracking sensors 128 of the welding helmet 112 may be known, stored, entered manually, and/or automatically detected and/or derived during a calibration procedure. In some examples, the helmet weld tracking sensors 128 may further comprise one or more inertial measurement units (IMUs) 212 (e.g., comprising one or more accelerometers, gyroscopes, and/or magnetometers). While shown as a helmet in the example of FIG. 1a, in some examples, the welding helmet 112 may be a different wearable, such as, for example, a headset, a pair of goggles/glasses, and/or other headgear.

In some examples, the (environment and/or helmet) weld tracking sensors 128 may sense, detect, measure, and/or capture sensor data relating to the positions and/or orientations of one or more components of the weld training simulation system 100 (e.g., the welding helmet 112, workpiece(s) 500, welding-type tool 300, etc.). In some examples, this data may be analyzed to determine, track, and/or monitor the position(s) and/or orientation of the components of the weld training simulation system 100 (e.g., relative to a reference point, another component, etc.). In some examples, the helmet circuitry 120 may perform and/or assist in the analysis of sensor data to determine the positions and/or orientations of one or more components of the weld training simulation system 100.

In some examples, one or more markers 301 positioned in or on components of the weld training simulation system 100 may assist in tracking the position and/or orientation of the component(s) to which the markers 301 are attached (see, e.g., FIGS. 3-5). For example, the marker(s) 301 may be easily recognizable by the welding simulator 150 in (e.g., image) sensor data captured by the weld tracking sensors 128. Through recognition of the marker(s) 301, and/or an arrangement of markers 301, the welding simulator 150 may be able to identify and/or recognize the component (and/or a particular portion of the component) to which the marker 301 is attached, and/or the position and/or orientation of the component.

In the example of FIG. 3, the welding-type tool 300 includes markers 301 attached to a handle, neck, and nozzle of the welding-type tool 300. Markers 301 are also attached to, and/or formed on, the workpieces 500 (see, e.g., FIG. 5). In some examples, the markers 301 may help the welding simulator 150 to track the position and/or orientation of the welding-type tool 300 and/or workpiece(s) 500.

In some examples a collection of markers 301 of the welding-type tool 300 and/or workpiece(s) 500 may form and/or define a recognizable and/or unique geometric configuration (and/or rigid body). In some examples, this geometric configuration (and/or rigid body) can be correlated (e.g., in memory) with a known (e.g., stored in memory) structural configuration and/or model of the welding-type tool 300 and/or workpiece(s) 500. Thus, by identifying and/or tracking the particular geometric configuration of markers 301, the weld training simulation system 100 may be able to identify and/or track the structural configuration (and/or particular portions) of the welding-type tool 300 and/or workpiece(s) 500.

In some examples, one or more of the markers 301 may be passive markers 301 that require no electrical power to operate, such as, for example, reflective markers 301 and/or pattern markers 301. In some examples, one or more of the markers 301 may be active markers 301 that are electrically powered, such as, for example, IR light emitting diodes (LEDs), and/or fiducial markers (e.g., IR light sources partially covered by light blocking patterns).

In some examples, the welding-type tool 300 and/or workpiece(s) 500 may include no markers 301. In such examples, the welding simulator 150 may instead use object recognition, computer vision, and/or other image processing techniques to identify, recognize, and/or track the welding-type tool 300 and/or workpiece(s) using the sensor data captured by the environment fixed tracking sensors 128 and/or helmet tracking sensors 128.

In the example of FIG. 1a, the welding helmet 112 also includes helmet circuitry 120. In some examples, the helmet circuitry 120 may include helmet processing circuitry, helmet memory circuitry, helmet I/O circuitry, and/or helmet communication circuitry. In some examples, the welding helmet 112 communicates with one or more external devices via one or more signals sent or received by the helmet communication circuitry.

In the example of FIG. 1a, the welding helmet 112 also includes helmet input/output (I/O) devices 132. In some examples, the helmet I/O devices 132 are devices through which an operator 114 may provide input to, and/or receive output from, the welding helmet 112. In some examples, the helmet I/O devices 132 may include knobs, buttons, levers, switches, touch screens, microphones, speakers, haptic devices, lights (e.g., LEDs), and/or other appropriate I/O devices 132. In some examples, the helmet I/O circuitry drives the helmet I/O devices 132. While shown as being retained on an external surface of the welding helmet 112 in the examples of FIG. 1a for the purposes of illustration, in some examples, some helmet I/O devices 132 may additionally, or alternatively, be retained within the welding helmet 112.

In the example of FIG. 1a, the welding helmet 112 also includes a helmet lens assembly 134 fixed to (and/or integrated into) a front portion of the welding helmet 112at approximately eye level. In some examples, the helmet lens assembly 134 includes a cover lens, an auto-darkening filter (ADF), and/or a display screen. In some examples, the cover lens of the helmet lens assembly 134 is (e.g., partially or fully) transparent and/or configured to allow an operator 114 to see through the cover lens and/or view the surrounding environment.

In some examples, the display screen of the helmet lens assembly 134 is a near-eye display. In some examples, the display screen is semi-transparent and/or configured to overlay information onto at least part of cover lens (e.g., virtual/simulated/holographic objects/effects, instructions, guidance, technique feedback, technique parameters, welding location(s), parameters, messages, etc.). In some examples, the display screen of the helmet lens assembly 134 may be considered a helmet I/O device 132.

In some examples, the welding helmet 112 may be used to implement portions of the weld training simulation system 100. For example, the helmet circuitry 120 may be used to implement some or all of the welding simulator 150. As another example, the helmet I/O devices 132 may implement some or all of the welding simulator UI 124. Thus, in some examples, the welding helmet 112 may comprise a convenient, compact, portable, self-contained, and/or independently operable weld training simulation system 100 unto itself.

FIG. 1b is a block diagram showing components and interconnections of the weld training simulation 100. In the example of FIG. 1b, the welding simulator 150 is shown communicatively and/or electrically connected with a simulator UI 124. In some examples, the simulator UI 124 is implemented via the equipment interface 122 and/or helmet I/O devices 132. In some examples, one or more additional, and/or alternative, input and/or output devices may be used as part of the weld simulator UI 124 (e.g., keyboard, mouse, remote control, pendant, separate display screen(s), separate speaker(s)/microphone(s), etc.).

In the example of FIG. 1b, the welding simulator 150 is also communicatively connected with the sensor system 126, the welding-type tool 300, and the workpiece(s) 500. In some examples, the welding simulator 150 receives sensor data from the sensor system 126 via the connection with the sensor system 126. In some examples, the welding simulator 150 receives the tool signal(s) via the connection with the welding-type tool 300, and/or controls the electromagnet(s) 399 in the welding-type tool 300 via the connection with the welding-type tool 300. In some examples, the welding simulator 150 controls the electromagnet(s) in the workpiece(s) 500 via the connection with the workpiece(s) 500.

In the example of FIG. 1b, the welding simulator 150 is shown as including simulator memory circuitry 152, simulator processing circuitry 154, simulator communication circuitry 156, and simulator UI circuitry 158 interconnected with one another via a common electrical bus. In some examples, the simulator UI circuitry 158 drives the simulator UI 124. In some examples, the simulator UI circuitry 158 is configured to generate one or more signals representative of input received via the simulator UI 124 and provide the signal(s) to the bus. In some examples, the simulator UI circuitry 158 is also configured to control the simulator UI 124 to generate one or more outputs in response to one or more signals (e.g., received via the bus).

In some examples, the simulator communication circuitry 156 includes one or more wireless adapters, wireless cards, cable adapters, wire adapters, dongles, radio frequency (RF) devices, wireless communication devices, Bluetooth devices, IEEE 802.11-compliant devices, WiFi devices, cellular devices, GPS devices, Ethernet ports, network ports, lightning cable ports, cable ports, etc. In some examples, the simulator communication circuitry 156 is configured to facilitate communication via one or more wired media and/or protocols (e.g., Ethernet cable(s), universal serial bus cable(s), etc.) and/or wireless mediums and/or protocols (e.g., cellular communication, general packet radio service (GPRS), near field communication (NFC), ultra high frequency radio waves (commonly known as Bluetooth), IEEE 802.11x, Zigbee, HART, LTE, Z-Wave, WirelessHD, WiGig, etc.). In some examples, the simulator communication circuitry 156 is coupled to and/or includes one or more antennas to facilitate wireless communication.

In some examples, the simulator communication circuitry 156 is configured to facilitate communications between the welding simulator 150 and other components of the weld training simulation system 100 (e.g., the welding-type tool 300, workpiece(s) 500, tracking sensor(s) 128, etc.). In some examples, the simulator communication circuitry 156 may receive one or more signals (e.g., from the components of the weld training simulation system 100) decode the signal(s), and provide the decoded data to the electrical bus. As another example, the simulator communication circuitry 156 may receive one or more signals from the electrical bus (e.g., representative of one or more inputs received via the simulator UI circuitry 158) encode the signal(s), and transmit the encoded signal(s) to a component of the weld training simulation system 100.

In some examples, the simulator processing circuitry 154 comprises one or more processors, controllers, and/or graphical processing units (GPUs). In some examples, the simulator processing circuitry 154 comprises counter circuitry and/or clock circuitry. In some examples, the simulator processing circuitry 154 is configured to execute machine readable instructions stored in the simulator memory circuitry 152.

In the example of FIG. 1b, the simulator memory circuitry 152 includes (and/or stores) a weld training simulation process 200. In some examples, the weld training simulation process 200 comprises machine readable instructions stored in simulator memory circuitry 152 and/or configured for execution by the simulator processing circuitry 154. In some examples, the weld training simulation process 200 may additionally, or alternatively, be implemented via discrete circuitry (e.g., of the simulator processing circuitry 154) rather than, or in addition to, being part of (and/or stored in) the simulator memory circuitry 152. While some of the disclosure below discusses the weld training simulation process 200 performing certain actions, this should be understood as a shorthand for one or more components of the weld training simulation system 100 (e.g., simulator processing circuitry 154, simulator communication circuitry 156, simulator UI 124, sensor system 126, etc.) performing the action(s) as part of the weld training simulation process 200.

While not shown in the example of FIG. 3, in some examples, the simulator memory circuitry 152 may also include (and/or store) one or more determined, target, present, and/or past parameters (e.g., simulation, equipment, tool, position, orientation, welding technique, and/or other parameters). In some examples, one or more parameters may be associated with timestamp, training exercise, and/or other information. In some examples, one or more of the stored parameters may be used and/or updated during operation of the weld training simulation process 200.

In some examples, during the weld training simulation process 200, the welding simulator 150 determines when and/or whether to provide haptic feedback and/or simulate a particular event based on various information (e.g., tracking info, parameter info, etc.). In some examples, in response to determining to provide haptic feedback and/or simulate a particular event, the welding simulator 150 controls one or more electromagnets 399 (and/or associated electromagnet power source(s) 302) to generate a magnetic field 600. In some examples, the generated magnetic field 600 may produce an attractive or repulsive magnetic force that mutually attracts or repels a workpiece 500 and welding-type tool 300 (or stick electrode 402), due to the magnetic material 350 and/or electromagnet(s) 399 in the workpiece 500 and welding-type tool 300 (or stick electrode 402). An operator 114 handling the welding-type tool 300 may experience this attraction and/or repulsion as haptic feedback that simulates a real world feel of a particular event being simulated.

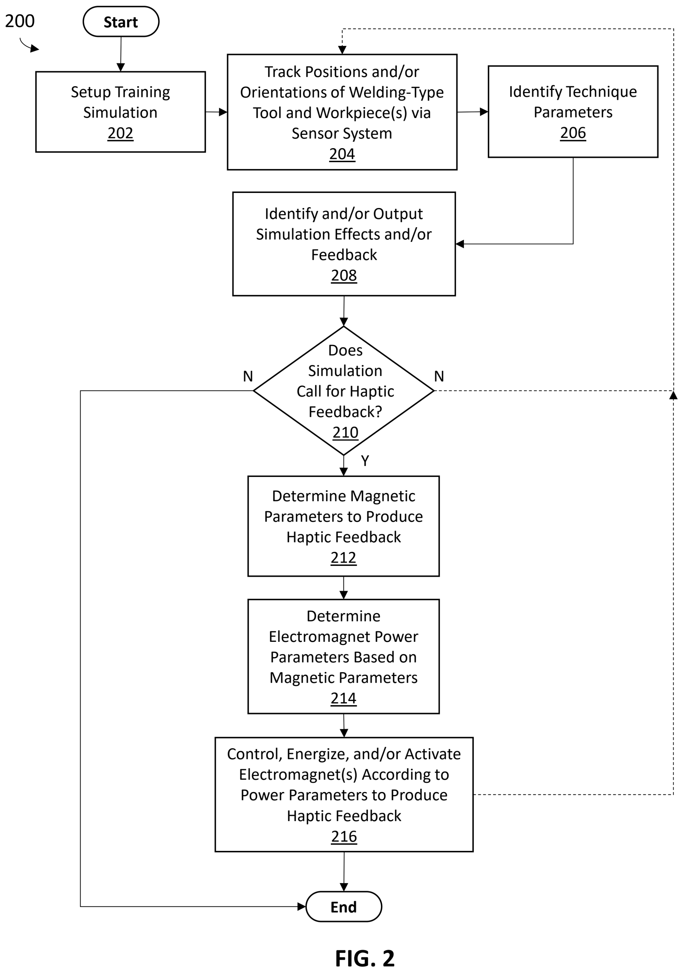

FIG. 2 is a flowchart illustrating an example operation of the weld training simulation process 200. In the example of FIG. 2, the weld training simulation process 200 begins at block 202. At block 202, the weld training simulation process 200 sets up a training simulation. In some examples, the setup may involve prompting for and/or receiving simulation parameters from the operator 114 or other user (e.g., via the simulator UI 124). In some examples, the setup may involve selecting a particular training exercise from a plurality of potential training exercises based on the received simulation parameters.

In some examples, the setup may additionally, or alternatively, involve prompting for and/or receiving one or more equipment parameters from the operator 114. In some examples, the setup may additionally, or alternatively, involve calibrating the sensor system 126 of the weld training simulation system 100. In some examples, the setup may additionally, or alternatively, involve prompting for connection of the welding-type tool 300 to the mock welding-type equipment 104, and/or prompting for connection of the clamp 106 to a workpiece 500 and/or the welding-type equipment.

In the example of FIG. 2, after block 202, the weld training simulation process 200 proceeds to block 204, where the weld training simulation process 200 tracks the position(s) and/or orientation(s) of the workpiece(s) 500 and/or welding-type tool 300. In some examples, the weld training simulation process 200 tracks the position(s) and/or orientation(s) based on sensor data captured by the tracking sensor(s) 128 of the sensor system 126, as discussed above.

In the example of FIG. 2, after block 204, the weld training simulation process 200 proceeds to block 206, where the weld training simulation process 200 identifies one or more welding technique parameters. In some examples, welding technique parameters include a distance between (e.g., a tip or end of) the welding-type tool 300 and a workpiece 500 (sometimes referred to as contact tip to work distance), a travel speed of the welding-type tool 300, a travel direction of the welding-type tool 300, a travel angle of the welding-type tool 300, a work angle of the welding-type tool 300, an aim of the welding-type tool 300, an orientation of the welding-type tool 300, a position of the welding-type tool 300, one or more weld bead/path parameters (e.g., position, length, straightness, etc.), one or more weave parameters (e.g., frequency, weave width, dwell time, etc.), and/or other parameters relating to welding technique. In some examples, the weld training simulation process 200 identifies the welding technique parameter(s) based on the position(s) and/or orientation(s) of the workpiece(s) 500 and/or the welding-type tool 300 tracked at block 204.

In some examples, at block 206, the weld training simulation process 200 also identifies and/or determines one or more simulation parameters. For example, the weld training simulation process 200 may determine a simulated power output, simulated gas flow rate, and/or other simulation parameters. In some examples, this determination may be based on one or more other parameters (e.g., welding technique parameters, equipment parameters, etc.).

In the example of FIG. 2, after block 206, the weld training simulation process 200 proceeds to block 208, where the weld training simulation process 200 identifies and/or outputs one or more simulation effects. In some examples, simulation effects are human perceptible effects generated by the weld training simulation process 200 that serve to simulate that which might be perceived if the operator 114 was engaged in an actual live welding-type operation. In some examples, the weld training simulation process 200 identifies which particular simulation effects to output (and/or how to output) based on sensor data captured by the sensor system 126, tool signal(s) received from the welding-type tool 300, and/or one or more parameters (e.g., simulation parameters, equipment parameters, welding technique parameters, position/orientation parameters, tool parameters etc.).

For example, the weld training simulation process 200 might determine, based on one or more parameters, that a workpiece 500 is in line of sight of an operator 114 wearing a welding helmet 112. In such an example, the weld training simulation process 200 may generate an image of a metallic material at a position in a display of the welding helmet 112 that is in the line of sight between the operator 114 and the (e.g., plastic) workpiece 500.

As another example, the weld training simulation process 200 might determine, based on one or more parameters and/or the tool signal(s) received from the welding-type tool 300, that a welding arc would be formed if the operator 114 were performing an actual live welding-type operation. In such an example, the weld training simulation process 200 might output one or more simulation effects to simulate the burning flame and/or electrical arc (e.g., images and/or sounds of the flame/arc, images and/or sounds of associated fumes, images and/or sounds of associated spatter, images of an associated weld bead, etc.).

At block 208, weld training simulation process 200 additionally identifies and/or outputs feedback. In some examples, the feedback may include welding technique feedback that relates to welding technique parameters. For example, the weld training simulation process 200 may compare identified welding technique parameters to expected welding technique parameters (e.g., stored in simulator memory circuitry 152 and/or identified based on the simulator parameter(s)). In such an example, the weld training simulation process 200 may determine whether one or more of the identified welding technique parameters are within a threshold range of what is expected, determine whether the technique needs to be adjusted, and/or output guidance and/or other feedback based on these determinations (e.g., via the simulator UI 124).

In some examples, feedback may include equipment parameter feedback relating to the equipment parameters. For example, the weld training simulation process 200 may compare the equipment parameters input by the operator to expected equipment parameters (e.g., stored in simulator memory circuitry 152 and/or identified based on the selected training exercise). In such an example, the weld training simulation process 200 may determine whether one or more of the identified equipment parameters are within a threshold range of what is expected, determine whether the equipment parameters need to be adjusted, and/or output guidance and/or other feedback based on these determinations (e.g., via the simulator UI 124).

In some examples, the weld training simulation process 200 identifies haptic feedback to generate at block 208. In some examples, this identification may involve determining whether to simulate an event correlated with the haptic feedback (e.g., an electrode sticking event, an excessive impedance event, and/or a flame/arc event). In some examples, the weld training simulation process 200 determines whether or not to simulate an event correlated with haptic feedback based on captured sensor data, the tool signal(s) received from the welding-type tool 300, and/or or more parameters.

For example, the weld training simulation process 200 may determine to simulate a flame/arc event if the weld training simulation process 200 has otherwise determined to simulate a flame and/or electrical arc. In some examples, the weld training simulation process 200 may determine to simulate a flame and/or arc if the welding-type tool 300 or stick electrode 402 are within a threshold distance of a workpiece 500, the target voltage and/or current are above a threshold, the simulated power is above a threshold, a target gas flow rate is above a threshold, and/or one or more tool signals have been received from the welding-type tool 300 indicating a trigger of the welding-type tool 300 has been depressed (e.g., where the welding-type tool300 is a MIG gun).

As another example, the weld training simulation process 200 may determine to simulate an electrode sticking event if the weld training simulation process 200 determines the target voltage and/or current are below a threshold, a simulated power is below a threshold, the distance between the workpiece 500 and the welding-type tool 300 (or stick electrode 402) is below a threshold, and/or the travel speed of the welding-type tool is above a threshold. As another example, the weld training simulation process 200 may determine to simulate an excessive impedance event if the connection sensors 130 indicate that the connections between the sockets 118 and plugs 116 are insecure, and/or the connection between the clamp 106 and the workpiece 500 are insecure. As another example, the weld training simulation process 200 may determine to simulate an arc/flame event, an electrode sticking event, and/or an excessive impedance event if the selected training simulation calls for such an event to be simulated (e.g., for the purposes of training an operator 114 how to recognize and/or handle such an event).

In the example of FIG. 2, the weld training simulation process 200 checks whether haptic feedback is called for at block 210, and branches accordingly. In some examples, the determination at block 210 is based on the identifications and/or determination at block 208. If haptic feedback is not called for, the weld training simulation process 200 is shown as ending (though, in some examples, the weld training simulation process 200 may instead return to block 202 or 204). In some examples, if haptic feedback is not called for, the weld training simulation process 200 deactivates any previously activated electromagnet(s) 399 at block 210 (e.g., by deactivating, deenergizing and/or otherwise controlling the electromagnet power source(s) 302). If haptic feedback is called for, the weld training simulation process 200 proceeds to block 212.

At block 212 the weld training simulation process 200 determines magnetic parameters of the magnetic field 600 needed to produce the appropriate haptic feedback. For example, different haptic feedback (and thus different magnetic parameters) may be called for depending on whether the weld training simulation process 200 determined at block 208 to simulate an electrode sticking event, an excessive impedance event, and/or an arc/flame event. In some examples, magnetic parameters include a magnetic force type (e.g., attractive or repulsive) and/or a magnetic strength.

Next, at block 214, the weld training simulation process 200 determines corresponding power parameters of the electrical power to be supplied to the electromagnet(s) 399. In some examples, power parameters include a current/voltage polarity and/or a current/voltage strength. In some examples, power parameters are determined based on the magnetic parameters. In some examples, the simulator memory circuitry 152 includes a mapping of haptic feedback and/or event type to magnetic parameters and/or magnetic parameters to power parameters, such as, for example, via one or more data structures.

In some examples, the simulator memory circuitry 152 may additionally store polarity information, orientation information, and/or position information of the magnetic material 350 and/or electromagnet(s) 399 in different welding-type tools 300, stick electrodes 402, and/or workpieces 500. In some examples, this information may be useful in determining appropriate magnetic and/or power parameters (e.g., to generate an attractive v. repulsive magnetic force).

In the example of FIG 2, the weld training simulation process 200 controls, activates, and/or energizes the electromagnet(s) 399 at block 216, such as, for example, by controlling the associated electromagnet power source(s) 302. In some examples, the electromagnet(s) 399 and/or electromagnet power source(s) 302 are controlled according to and/or based on the power parameter(s) determined at block 214. In some examples, the control of the electromagnet(s) 399 and/or electromagnet power source(s) 302 may be via one or more control signals output by the welding simulator 150. While shown as ending after block 216, in some examples, the weld training simulation process 200 may instead return to block 202 or 204 after block 216.

In some examples, the disclosed weld training simulation system 100 provides haptic feedback through the use of a magnetic field 600 generated by one or more electromagnets 399 positioned in or on a workpiece 500 and/or welding-type tool 300 (or a stick electrode 402 held by the welding-type tool 300). In some examples, an operator 114 holding the welding-type tool 300 will experience haptic feedback due to an attractive or repulsive magnetic field force that impacts the electromagnet(s) 399 and/or magnetic material 350 in the welding-type tool 300 (or the stick electrode 402 held by the welding-type tool 300). In some examples, the haptic feedback may be helpful in simulating different events and/or situations, such as, for example, an electrode sticking event, an excessive impedance event, and/or a flame/arc event.

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more non-limiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, a control circuit may include digital and/or analog circuitry, discrete and/or integrated circuitry, microprocessors, DSPs, etc., software, hardware and/or firmware, located on one or more boards, that form part or all of a controller, and/or are used to control a welding process, and/or a device such as a power source or wire feeder.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor.

The term "power" is used throughout this specification for convenience, but also includes related measures such as energy, current, voltage, and enthalpy. For example, controlling "power" may involve controlling voltage, current, energy, and/or enthalpy, and/or controlling based on "power" may involve controlling based on voltage, current, energy, and/or enthalpy.

As used herein, welding-type refers to welding (including laser welding and/or hot wire welding), cladding (including laser cladding), brazing, plasma cutting, plasma gouging, induction heating, carbon arc cutting or gouging, oxy fuel cutting, hot wire preheating, and/or resistive preheating.

As used herein, a welding-type tool refers to a tool suitable for and/or capable of welding (including laser welding and/or hot wire welding), cladding (including laser cladding), brazing, plasma cutting, plasma gouging, induction heating, carbon arc cutting or gouging, oxy fuel cutting, hot wire preheating, and/or resistive preheating.

As used herein, a welding-type power supply and/or welding-type power source refers to a device capable of, when input power is applied thereto, supplying output power suitable for welding (including laser welding and/or hot wire welding), cladding (including laser cladding), brazing, plasma cutting, plasma gouging, induction heating, carbon arc cutting or gouging, hot wire preheating, and/or resistive preheating; including but not limited to transformer-rectifiers, inverters, converters, resonant power supplies, quasi-resonant power supplies, switch-mode power supplies, etc., as well as control circuitry and other ancillary circuitry associated therewith.

As used herein, disable may mean deactivate, incapacitate, and/or make inoperative. As used herein, enable may mean activate and/or make operational.

Disabling of circuitry, actuators, and/or other hardware may be done via hardware, software (including firmware), or a combination of hardware and software, and may include physical disconnection, de-energization, and/or a software control that restricts commands from being implemented to activate the circuitry, actuators, and/or other hardware. Similarly, enabling of circuitry, actuators, and/or other hardware may be done via hardware, software (including firmware), or a combination of hardware and software, using the same mechanisms used for disabling.

Certain embodiments of the invention are described in the following clauses:
Clause 1 A non-transitory computer readable medium comprising machine readable instructions which, when executed by processing circuitry, causes the processing circuitry to:
   control an electromagnet in or on a first welding-type device to generate a magnetic field that induces the first welding-type device and a second welding-type device to be mutually attracted to one another via a magnetic attraction, or
   control the electromagnet to generate a reverse magnetic field that induces the first welding-type device and the second welding-type device to be mutually repelled from one another via a magnetic repulsion.
Clause 2 The non-transitory computer readable medium of clause 1, wherein the first welding-type device or the second welding-type device comprises a workpiece, a welding-type tool, or a welding electrode.
Clause 3 The non-transitory computer readable medium of clause 1, wherein controlling the electromagnet comprises controlling a power source, or a controllable circuit element, in electrical communication with the electromagnet.
Clause 4 The non-transitory computer readable medium of clause 1, wherein the machine readable instructions, when executed by the processing circuitry, cause the processing circuitry to control the electromagnet to generate the magnetic field in response to: a voltage setting being below a voltage threshold, a current setting being below a current threshold, a simulated power being below a power threshold, a travel speed of a welding-type tool being below a speed threshold, a contact tip to work distance being below a distance threshold, or a selected training exercise involving simulation of an electrode sticking event.
Clause 5 The non-transitory computer readable medium of clause 4, wherein the machine readable instructions, when executed by the processing circuitry, cause the processing circuitry to control a motor or movement mechanism of the welding-type tool to halt movement of a welding electrode held by the welding-type tool in response to: the voltage setting being below the voltage threshold, the current setting being below the current threshold, the simulated power being below the power threshold, the travel speed of the welding-type tool being below the speed threshold, the contact tip to work distance being below the distance threshold, or the selected training exercise involving simulation of the electrode sticking event.
Clause 6 The non-transitory computer readable medium of clause 1, wherein the machine readable instructions, when executed by the processing circuitry, cause the processing circuitry to control the electromagnet to generate the reverse magnetic field in response to: sensor data indicating that a clamp is not securely connected to a workpiece, the sensor data indicating that a cable is not securely connected to mock welding-type equipment, or a selected training exercise involving simulation of an excessive impedance event.
Clause 7 The non-transitory computer readable medium of clause 1, wherein the machine readable instructions, when executed by the processing circuitry, cause the processing circuitry to control the electromagnet to generate the reverse magnetic field in response to simulation of a flame or an electrical arc.
Clause 8 A welding system, comprising:
   a first welding-type device;
   an electromagnet in or on the first welding-type device; and
   processing circuitry configured to:
      control the electromagnet to generate a magnetic field that induces the first welding-type device and a second welding-type device to be mutually attracted to one another via a magnetic attraction, or
      control the electromagnet to generate a reverse magnetic field that induces the first welding-type device and the second-type welding device to be mutually repelled from one another via a magnetic repulsion.
Clause 9 The welding system of clause 8, wherein the first welding-type device or the second welding-type device comprises a workpiece, a welding-type tool, or a welding electrode.
Clause 10 The welding system of clause 9, wherein the first welding-type device comprises the welding-type tool, the welding-type tool being connected to mock welding-type equipment via a tool cable, the electromagnet being configured to receive an electrical current via the tool cable when the electromagnet is controlled to generate the magnetic field or the reverse magnetic field, and the welding-type tool being configured to send a trigger signal to the mock welding-type equipment via the tool cable.
Clause 11 The welding system of clause 8, wherein controlling the electromagnet comprises controlling a power source, or a controllable circuit element, in electrical communication with the electromagnet.
Clause 12 The welding system of clause 8, wherein the processing circuitry is configured to control the electromagnet to generate the magnetic field in response to: a voltage setting being below a voltage threshold, a current setting being below a current threshold, a simulated power being below a power threshold, a travel speed of a welding-type tool being below a speed threshold, a contact tip to work distance being below a distance threshold, or a selected training exercise involving simulation of an electrode sticking event.
Clause 13 The welding system of clause 12, further comprising:
   a motor; and
   a movement mechanism connected to the motor, the movement mechanism configured to use a motor output of the motor to move a welding electrode,
   wherein the processing circuitry is further configured to halt the motor, such that there is no motor output that the movement mechanism can use to move the welding electrode, in response to the voltage setting being below the voltage threshold, the current setting being below the current threshold, the simulated power being below the power threshold, the travel speed of the welding-type tool being below the speed threshold, the contact tip to work distance being below the distance threshold, or the selected training exercise involving simulation of the electrode sticking event.
Clause 14 The welding system of clause 8, wherein the processing circuitry is configured to control the electromagnet to generate the reverse magnetic field in response to: simulation of a flame or an electrical arc, sensor data indicating that a clamp is not securely connected to a workpiece, the sensor data indicating that a cable is not securely connected to mock welding-type equipment, or a selected training exercise involving simulation of an excessive impedance event.
Clause 15 A method, comprising:
   controlling, via processing circuitry, an electromagnet in or on a first welding-type device to generate a magnetic field that induces the first welding-type device and a second welding-type device to be mutually attracted to one another via a magnetic attraction, or
   controlling, via the processing circuitry, the electromagnet to generate a reverse magnetic field that induces the first welding-type device and the second welding-type device to be mutually repelled from one another via a magnetic repulsion.
Clause 16 The method of clause 15, wherein the first welding-type device or the second welding-type device comprises a workpiece, a welding-type tool, or a welding electrode.
Clause 17 The method of clause 15, wherein controlling the electromagnet comprises controlling a power source, or a controllable circuit element, in electrical communication with the electromagnet.
Clause 18 The method of clause 15, wherein the first welding-type device comprises the welding-type tool, the welding-type tool being connected to mock welding-type equipment via a tool cable, the electromagnet being configured to receive an electrical current via the tool cable when the electromagnet is controlled to generate the magnetic field or the reverse magnetic field, and the welding-type tool being configured to send a trigger signal to the mock welding-type equipment via the tool cable.
Clause 19 The method of clause 15, wherein the processing circuitry controls the electromagnet to generate the magnetic field in response to: a voltage setting being below a voltage threshold, a current setting being below a current threshold, a simulated power being below a power threshold, a travel speed of a welding-type tool being below a speed threshold, a contact tip to work distance being below a distance threshold, or a selected training exercise involving simulation of an electrode sticking event.
Clause 20 The method of clause 15, wherein the processing circuitry controls the electromagnet to generate the reverse magnetic field in response to: simulation of a flame or an electrical arc, sensor data indicating that a clamp is not securely connected to a workpiece, the sensor data indicating that a cable is not securely connected to mock welding-type equipment, or a selected training exercise involving simulation of an excessive impedance event.

## Claims

1. A non-transitory computer readable medium comprising machine readable instructions which, when executed by processing circuitry, causes the processing circuitry to:
control an electromagnet in or on a first welding-type device to generate a magnetic field that induces the first welding-type device and a second welding-type device to be mutually attracted to one another via a magnetic attraction, or
control the electromagnet to generate a reverse magnetic field that induces the first welding-type device and the second welding-type device to be mutually repelled from one another via a magnetic repulsion.

2. The non-transitory computer readable medium of claim 1, wherein the first welding-type device or the second welding-type device comprises a workpiece, a welding-type tool, or a welding electrode or wherein the controlling the electromagnet comprises controlling a power source, or a controllable circuit element, in electrical communication with the electromagnet.

3. The non-transitory computer readable medium of claim 1, wherein the machine readable instructions, when executed by the processing circuitry, cause the processing circuitry to control the electromagnet to generate the magnetic field in response to: a voltage setting being below a voltage threshold, a current setting being below a current threshold, a simulated power being below a power threshold, a travel speed of a welding-type tool being below a speed threshold, a contact tip to work distance being below a distance threshold, or a selected training exercise involving simulation of an electrode sticking event.

4. The non-transitory computer readable medium of claim 3, wherein the machine readable instructions, when executed by the processing circuitry, cause the processing circuitry to control a motor or movement mechanism of the welding-type tool to halt movement of a welding electrode held by the welding-type tool in response to: the voltage setting being below the voltage threshold, the current setting being below the current threshold, the simulated power being below the power threshold, the travel speed of the welding-type tool being below the speed threshold, the contact tip to work distance being below the distance threshold, or the selected training exercise involving simulation of the electrode sticking event.

5. The non-transitory computer readable medium of claim 1, wherein the machine readable instructions, when executed by the processing circuitry, cause the processing circuitry to control the electromagnet to generate the reverse magnetic field in response to: sensor data indicating that a clamp is not securely connected to a workpiece, the sensor data indicating that a cable is not securely connected to mock welding-type equipment, or a selected training exercise involving simulation of an excessive impedance event, or wherein the machine readable instructions, when executed by the processing circuitry, cause the processing circuitry to control the electromagnet to generate the reverse magnetic field in response to simulation of a flame or an electrical arc.

6. A welding system, comprising:
a first welding-type device;
an electromagnet in or on the first welding-type device; and
processing circuitry configured to:
control the electromagnet to generate a magnetic field that induces the first welding-type device and a second welding-type device to be mutually attracted to one another via a magnetic attraction, or
control the electromagnet to generate a reverse magnetic field that induces the first welding-type device and the second-type welding device to be mutually repelled from one another via a magnetic repulsion.

7. The welding system of claim 6, wherein the first welding-type device or the second welding-type device comprises a workpiece, a welding-type tool, or a welding electrode, and optionally, wherein the first welding-type device comprises the welding-type tool, the welding-type tool being connected to mock welding-type equipment via a tool cable, the electromagnet being configured to receive an electrical current via the tool cable when the electromagnet is controlled to generate the magnetic field or the reverse magnetic field, and the welding-type tool being configured to send a trigger signal to the mock welding-type equipment via the tool cable.

8. The welding system of claim 6, wherein controlling the electromagnet comprises controlling a power source, or a controllable circuit element, in electrical communication with the electromagnet.

9. The welding system of claim 6, wherein the processing circuitry is configured to control the electromagnet to generate the magnetic field in response to: a voltage setting being below a voltage threshold, a current setting being below a current threshold, a simulated power being below a power threshold, a travel speed of a welding-type tool being below a speed threshold, a contact tip to work distance being below a distance threshold, or a selected training exercise involving simulation of an electrode sticking event, and optionally, the welding system further comprising:
a motor; and
a movement mechanism connected to the motor, the movement mechanism configured to use a motor output of the motor to move a welding electrode,
wherein the processing circuitry is further configured to halt the motor, such that there is no motor output that the movement mechanism can use to move the welding electrode, in response to the voltage setting being below the voltage threshold, the current setting being below the current threshold, the simulated power being below the power threshold, the travel speed of the welding-type tool being below the speed threshold, the contact tip to work distance being below the distance threshold, or the selected training exercise involving simulation of the electrode sticking event.

10. The welding system of claim 6, wherein the processing circuitry is configured to control the electromagnet to generate the reverse magnetic field in response to: simulation of a flame or an electrical arc, sensor data indicating that a clamp is not securely connected to a workpiece, the sensor data indicating that a cable is not securely connected to mock welding-type equipment, or a selected training exercise involving simulation of an excessive impedance event.

11. A method, comprising:
controlling, via processing circuitry, an electromagnet in or on a first welding-type device to generate a magnetic field that induces the first welding-type device and a second welding-type device to be mutually attracted to one another via a magnetic attraction, or
controlling, via the processing circuitry, the electromagnet to generate a reverse magnetic field that induces the first welding-type device and the second welding-type device to be mutually repelled from one another via a magnetic repulsion.

12. The method of claim 11, wherein the first welding-type device or the second welding-type device comprises a workpiece, a welding-type tool, or a welding electrode or wherein controlling the electromagnet comprises controlling a power source, or a controllable circuit element, in electrical communication with the electromagnet.

13. The method of claim 11, wherein the first welding-type device comprises the welding-type tool, the welding-type tool being connected to mock welding-type equipment via a tool cable, the electromagnet being configured to receive an electrical current via the tool cable when the electromagnet is controlled to generate the magnetic field or the reverse magnetic field, and the welding-type tool being configured to send a trigger signal to the mock welding-type equipment via the tool cable.

14. The method of claim 11, wherein the processing circuitry controls the electromagnet to generate the magnetic field in response to: a voltage setting being below a voltage threshold, a current setting being below a current threshold, a simulated power being below a power threshold, a travel speed of a welding-type tool being below a speed threshold, a contact tip to work distance being below a distance threshold, or a selected training exercise involving simulation of an electrode sticking event.

15. The method of claim 11, wherein the processing circuitry controls the electromagnet to generate the reverse magnetic field in response to: simulation of a flame or an electrical arc, sensor data indicating that a clamp is not securely connected to a workpiece, the sensor data indicating that a cable is not securely connected to mock welding-type equipment, or a selected training exercise involving simulation of an excessive impedance event.
